# DEMANDE DE BREVET EUROPEEN

(11) **EP 3 944 289 A1**
(43) Date de publication de la demande: **26.01.2022**
(21) Numéro de dépôt: 21186812.0
(22) Date de dépôt: 20.07.2021
(51) Int. Cl.: H01L 21/311, H01L 21/768, H01L 23/522, H01L 23/528, H01L 23/00, H04L 9/32, G06F 21/44, G06F 21/73

(54) **PROCÉDÉ DE RÉALISATION D'UNE ZONE D'INDIVIDUALISATION D'UN CIRCUIT INTÉGRÉ**

(30) Priorité: 22.07.2020 FR 2007720
(71) Demandeur: Commissariat à l'Energie Atomique et aux Energies Alternatives, 75015 Paris (FR)
(72) Inventeur: POSSEME, Nicolas, 38054 GRENOBLE Cedex 09 (FR); LANDIS, Stefan, 38054 GRENOBLE Cedex 09 (FR); TEYSSEDRE, Hubert, 38054 GRENOBLE Cedex 09 (FR)
(74) Mandataire: Hautier, Nicolas

(57) **Abrégé**

L'invention porte sur un procédé de réalisation d'une zone d'individualisation d'une puce microélectronique comprenant un premier (10A) et un deuxième (20A) niveaux de pistes électriques (10, 20), et un niveau (30A) d'interconnexions comportant des vias (30), le procédé comprenant les étapes suivantes :
- fournir au moins une couche diélectrique (200, 201, 202) présentant une épaisseur h_{d},
- former sur l'au moins une couche diélectrique (200, 201, 202) une couche (300) de masque métallique présentant une épaisseur hₘ et une contrainte résiduelle σᵣ,
- graver la couche (300) de sorte à former des motifs de lignes (310) de largeur l,
- graver l'au moins une couche diélectrique (200, 201, 202) entre les motifs de lignes (310), de façon à former des tranchées (210) séparées par des murs (211),
- remplir les tranchées (210) avec un matériau électriquement conducteur de sorte à former les pistes électriques (10, 10_{KO}) du premier niveau (10A),
- former les vias (30, 30_{OK}, 30_{KO1}, 30_{KO2}) du niveau d'interconnexions (30A),
- former le deuxième niveau (20A) de pistes électriques (20, 20_{OK}),
le procédé étant caractérisé en ce que les épaisseurs h_{d} et hₘ, la contrainte résiduelle σᵣ, et la largeur l sont choisies de sorte à ce que les motifs de lignes (310) et les murs (211) sous-jacents présentent après gravure de l'au moins une couche diélectrique (200, 201, 202) des oscillations aléatoires.

## Description

### DOMAINE TECHNIQUE

La présente invention concerne l'individualisation des circuits intégrés. Elle trouve pour application particulièrement avantageuse la protection de circuits intégrés, de composants ou de dispositifs intégrant de tels circuits.

### ETAT DE LA TECHNIQUE

L'individualisation d'un circuit intégré dans un composant permet l'identification unique de ce composant. Cela permet par exemple de protéger le composant contres des attaques par émulation des fonctions que le composant est sensé faire.

Afin d'identifier de manière unique un circuit intégré, il existe des solutions visant à utiliser les dispersions fonctionnelles inhérentes aux circuits intégrés. Les résistances des lignes d'interconnexion métallique ou des vias différent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage. Le document EP3418936A1 décrit une solution basée sur des motifs de copolymères dont les domaines sont aléatoirement répartis.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

Il existe donc un besoin consistant à limiter, voire à résoudre, les problématiques des solutions connues.

### RESUME

Pour atteindre cet objectif, selon un mode de réalisation on prévoit un procédé de réalisation d'une zone d'individualisation d'une puce microélectronique, ladite puce comprenant au moins :
- un premier et un deuxième niveaux de pistes électriques,
- un niveau d'interconnexions situées entre les premiers et deuxième niveaux de pistes électriques et comportant des vias destinés à connecter électriquement des pistes électriques du premier niveau avec des pistes électriques du deuxième niveau.

Le procédé comprend au moins les étapes suivantes effectuées au niveau de la zone d'individualisation de la puce :
- fournir un empilement comprenant au moins une couche diélectrique portée par un substrat, une couche de masque métallique surmontant l'au moins une couche diélectrique, ladite au moins une couche diélectrique présentant une épaisseur hd, et la couche de masque métallique présentant une épaisseur hm et une contrainte résiduelle or,
- graver la couche de masque métallique de sorte à former des motifs de lignes de largeur I organisés selon un plan d'agencement prédéfini, lesdits motifs de lignes étant destinés à être transférés sous forme de murs dans l'au moins une couche diélectrique,
- graver l'au moins une couche diélectrique entre les motifs de lignes de la couche de masque métallique, de façon à former des tranchées séparées par des murs à base de l'au moins une couche diélectrique,
- remplir les tranchées avec un matériau électriquement conducteur de sorte à former les pistes électriques du premier niveau,
- former les vias du niveau d'interconnexions en fonction du plan d'agencement prédéfini,
- former le deuxième niveau de pistes électriques, par exemple en fonction du plan d'agencement prédéfini.

Avantageusement, les épaisseurs h_{d} et hₘ, la contrainte résiduelle σᵣ, et la largeur I sont choisies de sorte à ce que les motifs de lignes et les murs sous-jacents présentent après gravure de l'au moins une couche diélectrique des oscillations aléatoires, le remplissage des tranchées étant effectué de sorte que les pistes électriques du premier niveau soient fonction de ces oscillations aléatoires, les oscillations aléatoires étant telles que certains au moins des vias ne soient pas connectés aux pistes électriques du premier niveau.

Les oscillations sont typiquement générées par relaxation des contraintes mécaniques lors de la gravure des tranchées. L'apparition de surfaces libres au niveau des murs et des motifs de lignes impose une nouvelle situation d'équilibre et un nouvel état de contraintes (les contraintes normales aux surfaces libres sont nulles). En particulier, la relaxation des contraintes mécaniques dans les motifs de lignes peut être plastique et non homogène, en fonction du niveau de contrainte résiduelle σᵣ, et de l'épaisseur hₘ. Il en résulte une déformation des motifs de lignes à base de la couche de masque métallique, et par suite, des murs à base de l'au moins une couche diélectrique. La déformation va également dépendre de la largeur I des motifs de lignes et des murs sous-jacents, et de l'épaisseur h_{d} de l'au moins une couche diélectrique (typiquement la hauteur des murs). Le processus de relaxation dépendant de l'ensemble de ces paramètres génère des oscillations chaotiques et aléatoires.

Ainsi, les oscillations aléatoires des motifs de lignes, imposées ou transférées aux murs à base de l'au moins une couche diélectrique, modifient localement la largeur des tranchées gravées. Chaque tranchée bordée par deux murs oscillant aléatoirement présente dès lors une largeur et/ou une position variant aléatoirement.

Après remplissage, les pistes électriques du premier niveau présentent également ces mêmes variations aléatoires de largeur et/ou de position. Les pistes électriques du premier niveau présentent ainsi une morphologie qui dépend des oscillations aléatoires.

Dès lors, la formation des vias selon le plan d'agencement prédéfini implique qu'une partie des vias n'est pas connectée ou mal connectée aux pistes électriques du premier niveau. Les vias comprennent alors des vias fonctionnels connectés électriquement aux pistes électriques du premier niveau, des vias dysfonctionnels partiellement connectés électriquement aux pistes électriques du premier niveau, et des vias inactifs non connectés électriquement aux pistes électriques du premier niveau.

La répartition de ces vias fonctionnels, dysfonctionnels et inactifs dépend des oscillations aléatoires induites par le procédé.

Le procédé proposé permet donc de déformer volontairement mais aléatoirement le premier niveau de pistes électriques. Cette déformation volontaire permet de créer des vias inactifs répartis de façon aléatoire au sein de la zone d'individualisation de la puce. Le diagramme de réponse de la puce ou du circuit intégré sera donc intimement lié au caractère aléatoire de la répartition des vias inactifs. Cette réponse sera par conséquent unique. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en œuvre et à un cout réduit, afin de réaliser une zone d'individualisation d'un circuit intégré.

Le premier niveau de pistes électriques peut être réalisé avant ou après le deuxième niveau de pistes électriques.

Selon une possibilité, les pistes électriques du deuxième niveau sont déformées selon le principe du procédé, alternativement ou en combinaison avec les pistes électriques du premier niveau. Ainsi, le procédé comprend au moins les étapes suivantes effectuées au niveau de la zone d'individualisation de la puce :
- former le premier niveau de pistes électriques,
- former les vias du niveau d'interconnexions en fonction d'un plan d'agencement prédéfini,
- former le deuxième niveau de pistes électriques de sorte à connecter les vias du niveau d'interconnexions,
la formation d'au moins un niveau donné de pistes électrique pris parmi le premier niveau de pistes électriques et le deuxième niveau de pistes électriques comprend:
- fournir un empilement comprenant au moins une couche diélectrique portée par un substrat et surmontée d'une couche de masque métallique, l'au moins une couche diélectrique présentant une épaisseur hd, et la couche de masque métallique présentant une épaisseur hm et une contrainte résiduelle σr,
- graver la couche de masque métallique de sorte à former des motifs de lignes de largeur I organisés selon le plan d'agencement prédéfini, lesdits motifs de lignes étant destinés à être transférés dans l'au moins une couche diélectrique,
- graver l'au moins une couche diélectrique entre les motifs de lignes, de façon à former des tranchées séparées par des murs à base de l'au moins une couche diélectrique,
- remplir les tranchées avec un matériau électriquement conducteur de sorte à former les pistes électriques dudit niveau donné pris parmi le premier niveau de pistes électriques et le deuxième niveau de pistes électriques.

Les épaisseurs h_{d} et hₘ, la contrainte résiduelle σᵣ, et la largeur I sont choisies de sorte à ce que les motifs de lignes et les murs sous-jacents présentent, après gravure de l'au moins une couche diélectrique, des oscillations aléatoires, le remplissage des tranchées étant effectué de sorte que les pistes électriques dudit niveau donné soient fonction de ces oscillations aléatoires, les oscillations aléatoires étant telles que certains au moins des vias ne soient pas connectés aux pistes électriques dudit niveau donné.

Un autre aspect concerne un procédé de réalisation d'un dispositif microélectronique comportant au moins un circuit intégré, le circuit intégré comportant au moins:
- un premier et un deuxième niveaux des pistes électriques,
- un niveau d'interconnexions situées entre les premiers et deuxième niveaux des pistes électriques et comportant des via destinées à connecter électriquement des pistes du premier niveau avec des pistes du deuxième niveau
- une zone d'individualisation du circuit intégré.

La zone d'individualisation est réalisée en mettant en œuvre le procédé décrit précédemment, de préférence sur une partie seulement du circuit intégré.

Un autre aspect concerne un dispositif microélectronique et un procédé de réalisation d'un dispositif microélectronique.

Le dispositif microélectronique comporte au moins un circuit intégré comportant au moins une zone d'individualisation et une zone fonctionnelle, lesdites zones comprenant
- un premier et un deuxième niveaux de pistes électriques,
- un niveau d'interconnexions situé entre les premiers et deuxième niveaux de pistes électriques et comportant des vias destinées à connecter électriquement des pistes du premier niveau avec des pistes du deuxième niveau.

Avantageusement, les pistes électriques du premier niveau de la zone d'individualisation sont séparées par des murs à base d'au moins une couche diélectrique, les murs présentant des oscillations aléatoires telles que certains au moins des vias ne soient pas connectés aux pistes électriques du premier niveau. Les murs traversent la zone d'individualisation de part en part, de préférence depuis un premier côté de la zone d'individualisation jusqu'à un deuxième côté de la zone d'individualisation opposé au premier côté. Les oscillations aléatoires sont donc configurées pour dégrader volontairement la connexion électrique entre les pistes du premier niveau de la zone d'individualisation et certains vias du niveau d'interconnexion. Ainsi, certains vias du niveau d'interconnexion ne connectent pas ou connectent mal les pistes électriques du premier niveau de la zone d'individualisation. Le caractère aléatoire des oscillations rend unique le diagramme de réponse du circuit intégré. Ce diagramme de réponse est par ailleurs stable dans le temps, contrairement aux solutions de l'état de la technique. Le dispositif microélectronique présente ainsi une zone d'individualisation améliorée.

Le procédé de réalisation d'un tel dispositif comprend typiquement la mise en œuvre du procédé de réalisation d'une zone d'individualisation décrit par ailleurs, sur une partie seulement du circuit intégré.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente en perspective un premier niveau de pistes électriques et un deuxième niveau de pistes électriques interconnectés par des vias fonctionnels d'un niveau d'interconnexion, selon l'art antérieur.
Les figures 2A à 2E illustrent des étapes de formation d'un niveau de pistes électriques selon un procédé de type « damascene » de l'art antérieur.
La figure 3A représente en vue de dessus une zone fonctionnelle comprenant des pistes électriques du premier niveau associées à des vias fonctionnels, selon un exemple de réalisation de la présente invention.
La figure 3B représente en vue de dessus une zone d'individualisation comprenant des pistes électriques du premier niveau présentant des oscillations aléatoires, associées à des vias fonctionnels et à des vias dysfonctionnels ou inactifs, selon un exemple de réalisation de la présente invention.
La figure 4 est une image de microscopie électronique à balayage en vue de dessus de tranchées présentant des oscillations aléatoires après gravure, selon un mode de réalisation de la présente invention.
La figure 5 est un graphique présentant des zones paramétriques favorables à la génération d'oscillations aléatoires après gravure des tranchées, selon un mode de réalisation de la présente invention.
La figure 6 illustre schématiquement en coupe un mur comprenant un empilement de couches diélectriques, surmonté par un motif de ligne de masque métallique, selon un mode de réalisation de la présente invention.
Les figures 7A à 7F illustrent des étapes de fabrication d'un circuit intégré comprenant au moins une zone fonctionnelle et une zone d'individualisation, selon un exemple de réalisation de la présente invention.
La figure 8 représente en vue de dessus des pistes électriques du premier niveau formées dans les zones fonctionnelle et d'individualisation d'un circuit intégré, selon un mode de réalisation de la présente invention.
La figure 9 représente en vue de dessus des pistes électriques du premier niveau associées à des vias fonctionnels formés dans une zone fonctionnelle d'un circuit intégré, et des pistes électriques du premier niveau présentant des oscillations aléatoires, associées à des vias fonctionnels et à des vias dysfonctionnels ou inactifs formés dans une zone d'individualisation du circuit intégré, selon un exemple de réalisation de la présente invention.
La figure 10 représente en vue de dessus des pistes électriques du deuxième niveau associées à des vias fonctionnels formés dans une zone fonctionnelle d'un circuit intégré, et des pistes électriques du deuxième niveau associées à des vias fonctionnels et à des vias dysfonctionnels ou inactifs formés dans une zone d'individualisation du circuit intégré, selon un exemple de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs et les dimensions des différentes couches, vias et motifs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la contrainte résiduelle est compressive (σᵣ < 0). Cela favorise l'apparition des oscillations après gravure des tranchées.
Selon un exemple, l'épaisseur hₘ de la couche de masque métallique est supérieure à 15 nm. Cela permet d'augmenter l'amplitude des oscillations.
Selon un exemple, les murs présentent un facteur de forme h_{d} / l ≥ 2. Cela permet d'augmenter l'amplitude des oscillations.
Selon un exemple, les murs présentent sensiblement la même longueur. Selon un exemple, les murs sont continus sur toute leur longueur. Selon un exemple, les murs présentent une longueur correspondant sensiblement à une dimension de la zone d'individualisation. Selon un exemple, les murs traversent de part en part la zone d'individualisation.
Selon un exemple, le rapport des épaisseurs de l'au moins une couche diélectrique et de la couche de masque métallique est tel que 2 ≥ h_{d} / hₘ ≥ 1. Cela permet d'augmenter l'amplitude des oscillations.
Selon un exemple, l'épaisseur h_{d} de l'au moins une couche diélectrique est supérieure à 100 nm.
Selon un exemple, le masque métallique est fait ou est à base de l'un parmi les matériaux suivants : le Ti, le TiN, le TaN. Il peut également être fait de tout métal dont il est possible de contrôler la contrainte résiduelle pendant le dépôt, à l'instar du TiN.
Selon un exemple, l'au moins une couche diélectrique comprend une couche à base de SiOCH dense ou poreux (p-SiOCH), ou à base de SiO₂.
Selon un exemple, les motifs de lignes sont rectilignes avant gravure de l'au moins une couche diélectrique.
Selon un exemple alternatif couvert par la présente invention, les motifs de lignes sont curvilignes avant gravure de l'au moins une couche diélectrique. Les oscillations aléatoires formées après gravure se superposent au motif de ligne rectiligne ou curviligne initial, c'est-à-dire avant gravure.
Selon un exemple, la formation du deuxième niveau de pistes électriques est effectuée de sorte à ce que les pistes électriques du deuxième niveau présentent également des oscillations aléatoires. Typiquement, la formation du deuxième niveau de pistes électriques est effectuée de façon semblable à la formation du premier niveau de pistes électriques. Cela permet d'augmenter la probabilité de connexions défectueuses entre les pistes électriques des premier et deuxième niveaux.
Selon un exemple, la puce présente au moins une autre zone, distincte de la zone d'individualisation, destinée à former une zone fonctionnelle de la puce.
Selon un exemple, le procédé comprend en outre les étapes suivantes :
   - former dans la zone d'individualisation un masque de protection sur la couche de masque métallique préalablement à la formation des motifs de ligne,
   - graver la couche de masque métallique dans la zone fonctionnelle, en dehors de la zone d'individualisation, de sorte que la couche de masque métallique dans la zone fonctionnelle présente une épaisseur h_{f} < hₘ,
   - retirer le masque de protection avant de former les motifs de lignes dans la zone d'individualisation.
Selon un exemple, les motifs de lignes sont formés successivement dans la zone fonctionnelle et dans la zone d'individualisation.
Selon un exemple, les pistes électriques du premier niveau de la zone fonctionnelle sont rectilignes.

La réalisation des pistes électriques présentant des oscillations aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente typiquement une surface plus grande que la surface de la zone d'individualisation. Le premier et le deuxième niveaux de pistes électriques ainsi que le niveau d'interconnexion s'étendent dans ladite au moins une autre zone. De manière classique, la zone fonctionnelle du circuit intégré comprend des entrées et des sorties logiques. Cette zone fonctionnelle est destinée à assurer des fonctions logiques pour le fonctionnement attendu du circuit intégré. Outre les pistes électriques, cette zone fonctionnelle peut éventuellement comprendre des structures micro-électroniques, telles que par exemple des transistors, des diodes, des MEMS etc.

La zone d'individualisation a quant à elle pour fonction de rendre unique chaque circuit intégré.

Dans le cadre de la présente invention, une zone d'individualisation dite PUF est parfaitement différenciée d'une zone fonctionnelle destinée par exemple à effectuer des opérations logiques. La zone d'individualisation quant à elle a principalement et de préférence uniquement comme fonction de permettre l'identification unique de la puce et donc son authentification de la puce. La zone d'individualisation est accessible distinctement de la zone fonctionnelle. La zone d'individualisation est localisée sur une zone bien délimitée de la puce. La zone d'individualisation est par exemple de forme polygonale, par exemple rectangulaire. Ainsi, n'importe quelle zone défectueuse ne peut pas être assimilable à une zone d'individualisation PUF. De même, n'importe quelle zone non défectueuse ne peut pas être assimilable à une zone fonctionnelle.

La zone fonctionnelle présente typiquement une surface au moins deux fois supérieure à celle de la zone d'individualisation. La zone d'individualisation s'étend sur au moins 5% et de préférence sur au moins 10% de la surface du circuit intégré.

Dans la présente demande, les termes « puce » et « circuit intégré » sont employés en synonymes.

Dans la présente demande, les termes « oscillations » et « ondulations » sont employés en synonymes. Ces termes désignent une forme sinueuse, faite de courbes alternativement concaves et convexes. Les oscillations ne sont pas nécessairement périodiques. Elles se superposent au motif de lignes initialement prévu par le plan d'agencement du circuit ou « layout », qui est le terme couramment employé pour désigner ce plan d'agencement. Les expressions « plan d'agencement » et « agencement » sont équivalentes et peuvent être substituées l'une à l'autre.

La contrainte résiduelle dans la couche de masque métallique peut dépendre du matériau du masque métallique, de la technique de dépôt de cette couche et de l'épaisseur déposée. L'homme du métier sait en général quelle contrainte résiduelle subsiste dans une telle couche, par exemple au moyen d'abaques. Différentes techniques de caractérisation (par exemple mesure du rayon de courbure d'une plaque sur laquelle la couche est déposée pleine plaque) couramment utilisées dans l'industrie microélectronique permettent en outre de mesurer cette contrainte résiduelle.

Il est précisé que, dans le cadre de la présente invention, le terme via regroupe toutes les connexions électriques tels que les plots, lignes et structures conductrices qui s'étendent, de préférence perpendiculairement, entre deux couches, successives ou non, du circuit intégré, soit entre deux niveaux de pistes électriques. Chaque niveau des pistes électriques s'étend principalement selon un plan et peut comporter des structures micromécaniques ou microélectroniques fonctionnelles telles que des transistors par exemple. De préférence les vias forment chacun un plot, de section sensiblement circulaire.

Dans le cadre de la présente invention, un via présente une dimension critique CDᵥᵢₐ, par exemple un diamètre, prise selon une coupe parallèle aux différents niveaux des pistes électriques intégrées. De préférence, CDᵥᵢₐ est inférieure à 100 nm. De préférence CDᵥᵢₐ est comprise entre 10 nm et 70 nm.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, une structure « à base » d'un matériau A, un substrat, un film, une couche, une structure comprenant ce matériau A uniquement ou ce matériau A et éventuellement d'autres matériaux, par exemple des éléments dopants.

Plusieurs modes de réalisation de l'invention mettant en œuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Ainsi, selon une possibilité, les formations des premier et deuxième niveaux peuvent être interverties et le deuxième niveau peut être formé avant le premier niveau. La désignation « premier » et « deuxième » niveaux est arbitraire. Le procédé couvre également le cas où la formation du « deuxième » niveau est configurée de manière à ce que les pistes électriques du « deuxième » niveau soient fonction des oscillations aléatoires générées par la mise en œuvre du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl methacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Des couches et/ou des revêtements antireflets peuvent être associés aux résines. Cela permet notamment d'améliorer la résolution de lithographie. Dans la suite, les différents masques à base de résine sont de préférence associés à de telles couches antireflets.

Selon un exemple, le masque métallique peut être qualifié de masque dur. La couche de masque métallique peut être qualifiée de couche de masque dur métallique.

Ce masque est notamment qualifié de « dur » par souci de distinction vis-à-vis des masques à base de résine. Il résiste aux gravures habituellement utilisées pour graver des masques de résine.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, on parlera préférentiellement d'épaisseur pour une couche et de profondeur pour une gravure. L'épaisseur est prise selon une direction normale au plan d'extension principal de la couche, et la profondeur est prise perpendiculairement au plan basal xy du substrat. Ainsi, une couche s'étendant parallèlement au plan basal présente typiquement une épaisseur selon z, et une gravure présente une profondeur selon z également. Les termes relatifs « sur », « surmonte », « sous », « sous-jacent » se réfèrent à des positions prises selon la direction z.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

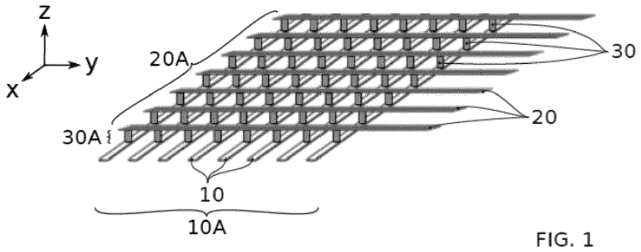

La figure 1 représente de manière schématique une portion d'un circuit intégré comportant un premier niveau 10A de pistes électriques 10, et un deuxième niveau 20A de pistes électriques 20. Chacun de ces niveaux 10A, 20A s'étend principalement dans un plan. Ces plans sont sensiblement parallèles entre eux et à un substrat, non illustré, sur lequel reposent ces premier 10A et deuxième 20A niveaux de pistes électriques 10, 20. Le circuit intégré comprend également un niveau d'interconnexions 30A configuré pour connecter électriquement des pistes du premier niveau 10A avec des pistes du deuxième niveau 20A, éventuellement de manière redondante. Ce niveau d'interconnexions 30A comprend des portions conductrices généralement qualifiées de vias 30. On notera que des vias 30 peuvent connecter des pistes de deux niveaux qui ne sont pas adjacents mais qui sont eux-mêmes séparés par un ou plusieurs autres niveaux.

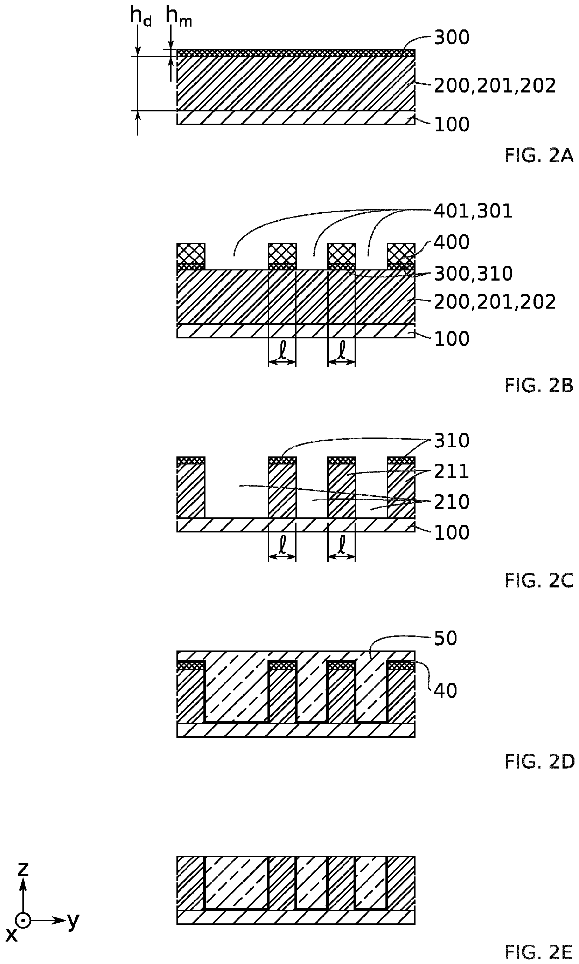

Les figures 2A à 2E illustrent schématiquement des étapes classiques de formation d'un niveau de pistes électriques, typiquement un premier niveau 10A.

Un empilement selon z de couches diélectriques 200, 201, 202 est d'abord formé sur un substrat 100 (figure 2A). Cet empilement de couches diélectriques 200, 201, 202 présente une épaisseur h_{d} et peut comprendre les couches suivantes, à partir du substrat 100 :
- Optionnellement, une couche d'arrêt de gravure 201, par exemple à base de SiCN. Cette couche SiCN 201 est typiquement déposée par dépôt chimique en phase vapeur assisté par plasma PECVD (plasma enhanced-chemical vapor déposition). Elle peut présenter une épaisseur de l'ordre de 20 nm.
- Une couche diélectrique 200, par exemple une couche d'oxyde de silicium dopée au carbone SiOCH. Cette couche SiOCH peut être dense ou poreuse (p-SiOCH), par exemple avec une porosité de l'ordre de 25%. Elle présente typiquement une constante diélectrique peu élevée, par exemple de l'ordre de 2,5. Elle peut ainsi être qualifiée de couche ULK (Ultra Low k). Cette couche SiOCH 200 peut être déposée par PECVD. Elle peut présenter une épaisseur typiquement comprise entre 50 nm et 300 nm.
- Optionnellement, une couche d'oxyde de silicium 202. Cette couche 202 peut être déposée par PECVD. Elle peut présenter une épaisseur comprise entre 20 nm et 100 nm.

Une couche 300 de masque dur métallique, désignée également masque dur métallique 300 ou simplement masque 300, est ensuite formée sur l'empilement de couches diélectriques 200, 201, 202 (figure 2A). Ce masque 300 peut être à base de titane Ti ou de nitrure de titane TiN, voire de nitrure de tantale TaN. Selon un mode de réalisation le masque métallique 300 est fait de nitrure de titane. Il peut être formé par dépôt physique en phase vapeur (PVD). Le masque 300 présente typiquement une épaisseur hₘ et une contrainte résiduelle σᵣ. La contrainte résiduelle σᵣ dépend généralement de la technique et/ou des paramètres de dépôt. Elle peut être en tension (σᵣ>0) ou en compression (σᵣ < 0). De façon classique, on cherche à minimiser cette contrainte résiduelle σᵣ.

Le masque métallique 300 est structuré par l'intermédiaire d'un masque 400 présentant des ouvertures 401 (figure 2B). Ces ouvertures 401 du masque 400 servent notamment à ouvrir le masque métallique 300. En fonction de la technique mise en œuvre pour ouvrir le masque 300, le masque 400 peut être formé d'une ou plusieurs couches. Il peut être à base de résine, par exemple de résine photosensible, par exemple à tonalité positive. Un revêtement antireflets sous-jacent de type BARC (Bottom Anti Reflective Coating signifiant revêtement anti-reflexion de fond) est de préférence intercalé entre le masque métallique 300 et le masque 400. Le masque 400 en résine photosensible peut présenter une épaisseur comprise entre 100 nm et 500 nm. Le revêtement antireflets peut présenter une épaisseur comprise entre 20 nm et 80 nm.

Alternativement, le masque 400 peut comprendre deux couches de type SOC (spin on carbon) et SiARC (silicon anti reflective coating signifiant revêtement anti réflexion à base de silicium), ainsi qu'une couche de résine photosensible. Les épaisseurs de ces trois couches varient selon la nature des produits employés ainsi que des dimensions des vias visées. Elles sont typiquement de l'ordre de 150 nm pour le SOC, 30 nm pour le SiARC et environ 100 nm pour la résine.

De préférence, la ou les couches de masque 400, et éventuellement le revêtement antireflets, sont déposés par une méthode classique de spin coating (à la tournette).

Les ouvertures 401 du masque 400 sont réalisées en mettant en œuvre des techniques classiques de lithographie, telles que la lithographie optique, la lithographie électronique par faisceau d'électrons (ebeam), la lithographie par nanoimpression ou toute autre technique de lithographie connue de l'homme du métier.

Le revêtement antireflets et le masque métallique 300 peuvent être gravés par plasma, à l'aide d'une chimie de gravure à base de chlore, par exemple Cl₂ /BCl₃. Ce type de plasma permet d'utiliser un masque 400 à base de résine présentant une fine épaisseur, par exemple inférieure à 200 nm.

A l'issue de cette gravure, le masque 300 comprend des motifs de lignes 310, séparés par des ouvertures de masque 301 (figure 2B). Les motifs de lignes 310 présentent typiquement une largeur I. Ils sont destinés à être transférés dans l'empilement de couches diélectriques 200, 201, 202 sous-jacent.

Après ouverture du masque 300 et retrait du masque 400, typiquement par plasma d'oxygène, l'empilement de couches diélectriques 200, 201, 202 est gravé de façon à former des tranchées 210 (figure 2C). Les couches diélectriques 200, 202 sont de préférence gravées par plasma, par exemple par plasma fluoré. On peut pour cela utiliser une chimie fluorocarbonnée C₄F₈ /N₂ /Ar/O₂. La couche d'arrêt de gravure 201 à base de SiCN est typiquement ouverte par plasma à base d'une chimie CH₃F /CF₄/ N₂ /Ar, de façon à exposer le substrat 100.

Les tranchées 210 sont séparées par des murs 211 à base des couches 200, 201, 202. Ces murs 211 présentent typiquement une hauteur h_{d} et une largeur I (figure 2C). Ils sont surmontés par les motifs de lignes 310.

De manière préférée mais optionnelle, une couche barrière 40 est ensuite déposée de façon conforme au fond des tranchées 210, sur les murs 211 et les motifs de lignes 310. Le rôle de cette couche barrière 40 est d'éviter une diffusion du métal des pistes dans la couche diélectrique 200.

Les tranchées 210 sont alors remplies par un matériau électriquement conducteur 50 - typiquement du cuivre (figure 2D).

Une étape de planarisation, par exemple par polissage mécano-chimique CMP, est effectuée après remplissage des tranchées 210, de façon à retirer l'excès de matériau conducteur. Ce polissage CMP permet également de retirer les motifs de lignes 310. Les pistes électriques 10 du premier niveau 10A sont ainsi formées (figure 2E).

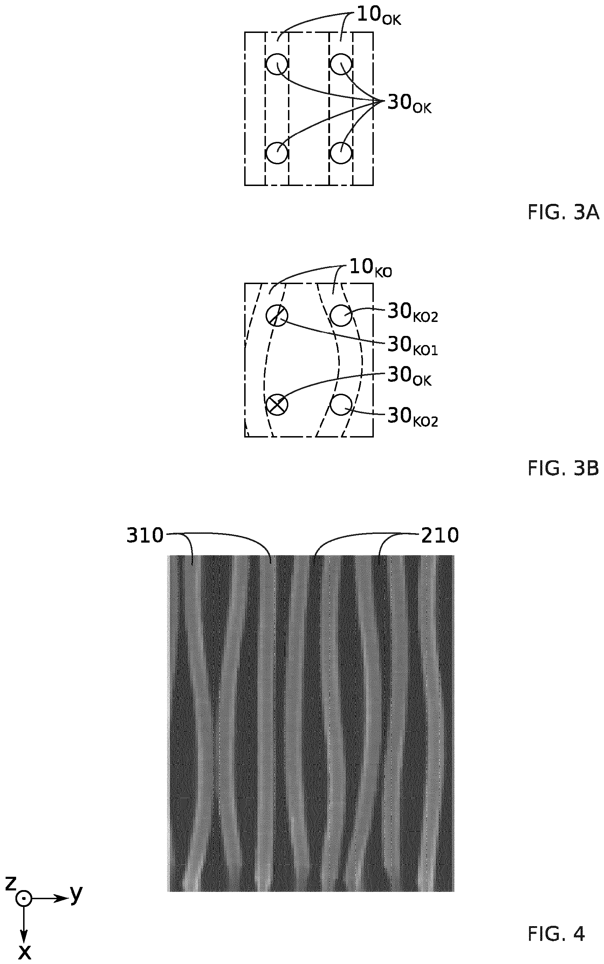

En mettant en œuvre ce procédé typiquement connu sous le nom de « damascene », l'homme du métier peut réaliser des pistes électriques 10 rectilignes d'un premier niveau 10A, comme illustré en vue de dessus à la figure 3A.

Ces pistes 10, 10_{OK} peuvent ensuite être connectées à des vias 30, 30_{OK} du niveau d'interconnexions 30A. La formation de ces vias 30 est connue par ailleurs. Les pistes 10_{OK} et les vias 30_{OK} sont ainsi formés selon le *layout* du circuit intégré. Les vias 30_{OK} sont des vias fonctionnels connectés électriquement aux pistes électriques 10_{OK} du premier niveau 10A.

Afin de réaliser une zone d'individualisation du circuit intégré, le procédé de fabrication décrit ci-dessus est modifié de façon à former des pistes 10_{KO} présentant des oscillations ou des ondulations et/ou des variations de largeur, comme illustré en vue de dessus à la figure 3B. Les vias formés selon le *layout* du circuit intégré ne se superposent alors plus parfaitement aux pistes électriques 10_{KO} oscillantes. Les vias 30 comprennent alors des vias fonctionnels 30_{OK}, et des vias dysfonctionnels ou inactifs 30_{KO1}, 30_{KO2}. Les vias dysfonctionnels 30_{KO1} sont typiquement partiellement connectés aux pistes électriques 10_{KO} du premier niveau. Ils présentent notamment une résistance électrique bien supérieure aux vias fonctionnels 30_{OK}. Les vias inactifs 30_{KO2} sont typiquement non connectés aux pistes électriques 10_{KO} du premier niveau.

Selon une possibilité, les vias dysfonctionnels 30_{KO1} sont repérés, par exemple en mesurant leur résistance. Il est alors préférable de les désactivés. Cela permet de figer leur comportement électrique. Cela améliore la stabilité du diagramme de réponse du circuit intégré dans le temps.

La figure 4 est une image de microscopie électronique en vue de dessus montrant des oscillations obtenues sur les motifs de lignes 310 lors de la gravure des tranchées 210.

Pour obtenir de telles oscillations, le procédé décrit ci-dessus en référence aux figures 2A à 2E est adapté en choisissant les valeurs des paramètres de contrainte résiduelle σᵣ, de largeur I, d'épaisseurs h_{d} et hₘ. Les valeurs des paramètres sont de préférence prises dans les gammes suivantes :
La contrainte résiduelle σᵣ est négative (en tension) et de préférence inférieure à 1000 MPa.
La largeur I des motifs de lignes 310 est inférieure à 90 nm et de préférence inférieure à 70 nm.
L'épaisseur hₘ de masque métallique 300 est de préférence supérieure à 15 nm.
L'épaisseur h_{d} de l'au moins une couche diélectrique est de préférence supérieure à 100 nm.

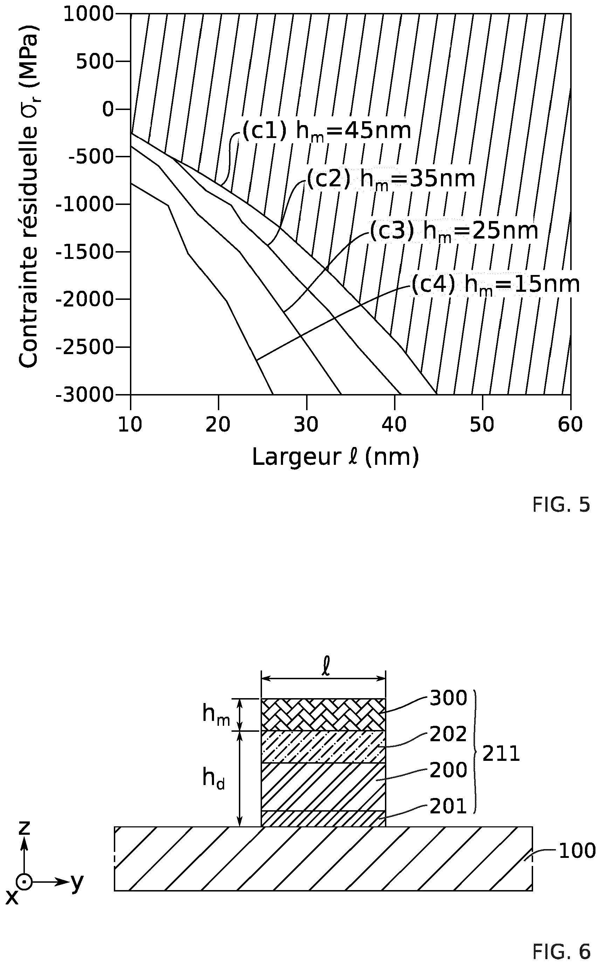

La figure 5 présente des courbes c1, c2, c3, c4 délimitant des régions où survient le phénomène d'ondulations dans les motifs de lignes 310 lors de la gravure des tranchées 210. Ces courbes déterminent en partie quelles valeurs de contrainte résiduelle σᵣ est nécessaire pour une largeur I des motifs de lignes 310 et pour une épaisseur hₘ de masque métallique 300 données. Les courbes c1, c2, c3, c4 de la figure 5 ont été simulées pour une hauteur de mur 211 h_{d} = 180 nm. Ces courbes c1, c2, c3, c4 forment un abaque auquel l'homme du métier peut se référer pour générer intentionnellement des ondulations lors de la gravure des tranchées 210.

Ainsi, pour une hauteur de mur 211 h_{d}= 180 nm, les couples de valeurs (σᵣ ; I) situés sous chacune des courbes c1, c2, c3, c4 donnent lieu à l'apparition d'ondulations lors de la gravure des tranchées 210. La courbe c1 correspond à une épaisseur de masque 300 hₘ = 45nm. La courbe c2 correspond à une épaisseur de masque 300 hₘ = 35nm.

La courbe c3 correspond à une épaisseur de masque 300 hₘ = 25nm.

La courbe c4 correspond à une épaisseur de masque 300 hₘ = 15nm.

On remarque que pour une hauteur donnée de mur 211, typiquement ici h_{d} = 180 nm, plus la largeur I des motifs de lignes 310 à graver est large, plus l'épaisseur hₘ de masque 300 doit être importante (à contrainte résiduelle σᵣ constante) pour engendrer des oscillations. A épaisseur hₘ de masque 300 constante, plus la largeur I des motifs de lignes 310 augmente, plus la contrainte résiduelle σᵣ doit être importante (en valeurs négatives) pour engendrer des oscillations.

Par ailleurs, selon un autre abaque de courbes non illustré, il est à noter qu'à épaisseur hₘ de masque 300 constante, plus la largeur I des motifs de lignes 310 augmente, plus la hauteur h_{d} de mur 211 doit être importante pour engendrer des oscillations.

Le choix des paramètres σᵣ, I, hₘ, h_{d} peut être effectué par exemple en fonction des courbes illustrées à la figure 5, sous forme d'abaque mesuré ou simulé. Un tel abaque peut être facilement réalisé par l'homme du métier en fonction de la hauteur de mur visée. Cela permet de savoir si des oscillations sont effectivement engendrées ou non en fonction des valeurs des autres paramètres. Il est possible d'obtenir des abaques similaires en fixant un autre des paramètres, par exemple pour une épaisseur de masque donnée ou pour une largeur de ligne donnée. Cela permet par exemple d'évaluer la gamme paramétrique d'obtention des oscillations pour différentes hauteurs de mur.

Le choix des paramètres est effectué de façon à obtenir des amplitudes d'ondulations suffisantes pour permettre une mauvaise connexion de certains vias avec les pistes électriques créées à partir desdites ondulations. On choisira notamment une contrainte résiduelle σᵣ suffisamment élevée pour permettre une déformation des motifs de lignes. Selon une possibilité, la dimension critique CDᵥᵢₐₛ des vias (typiquement leur diamètre) est inférieure à la largeur I des motifs de lignes 310. Cela augmente la probabilité d'avoir un via non superposé à la piste électrique qui lui est associée dans le *layout.*

La figure 6 présente un exemple de mur 211 surmonté par un motif de ligne 310 qui donne lieu à de telles ondulations lors de la gravure des tranchées 210. Le mur 211 comprend typiquement une couche d'arrêt de gravure 201 en SiCN d'épaisseur 20 nm, une couche diélectrique 200 en p-SiOCH d'épaisseur 120 nm et une couche diélectrique 202 en SiO2 d'épaisseur 40 nm. Le mur 211 présente ainsi une hauteur h_{d} = 180 nm. Ce mur 211 est surmonté par un motif de ligne 310 en TiN d'épaisseur hₘ = 35 nm. Le mur 211 et le motif de ligne 310 présentent typiquement une largeur I ≤ 50 nm.

L'invention est typiquement mise en œuvre pour réaliser une zone d'individualisation 1 (zone PUF) dans un circuit intégré comprenant par ailleurs une zone fonctionnelle 2 (zone non PUF). Dans ce cas le procédé de réalisation de la zone d'individualisation est mis en œuvre sur une partie seulement du circuit intégré.

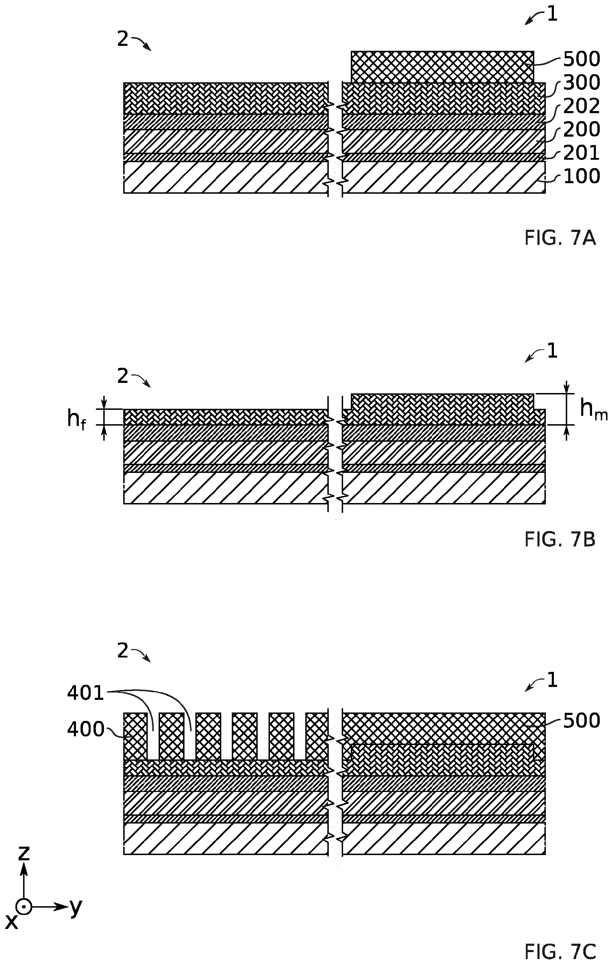

Les figures 7A à 7F illustrent un exemple de fabrication de zones PUF et non PUF sur un même circuit intégré.

Comme illustré à la figure 7A, le même empilement comprenant l'au moins une couche diélectrique 200, 201, 202 et le masque métallique 300 est formé au niveau des zones PUF 1 et non PUF 2. Le masque métallique 300 présente à ce stade une même épaisseur hₘ au niveau de chacune des zones PUF 1 et non PUF 2. Pour moduler cette épaisseur hₘ en fonction des zones PUF 1 et non PUF 2, un masque de protection 500 est d'abord déposé sur la zone PUF 1. Ce masque de protection 500 peut être à base de résine, de façon similaire au masque 400 à base de résine utilisé pour la structuration par lithographie du masque métallique 300.

L'épaisseur h_{f} de masque métallique 300 est diminuée dans la zone non PUF 2, tandis que la zone PUF 1 reste protégée (figure 7B). Cette réduction d'épaisseur peut être réalisée par une étape de gravure plein plaque connue sous le nom de « etch-back ».

Après réduction de l'épaisseur h_{f} de masque métallique 300 dans la zone non PUF 2, le procédé classique « damascene » de lithographie/gravure peut être mis en œuvre dans la zone non PUF 2 en protégeant la zone PUF 1 par un masque de protection 500 (figure 7C).

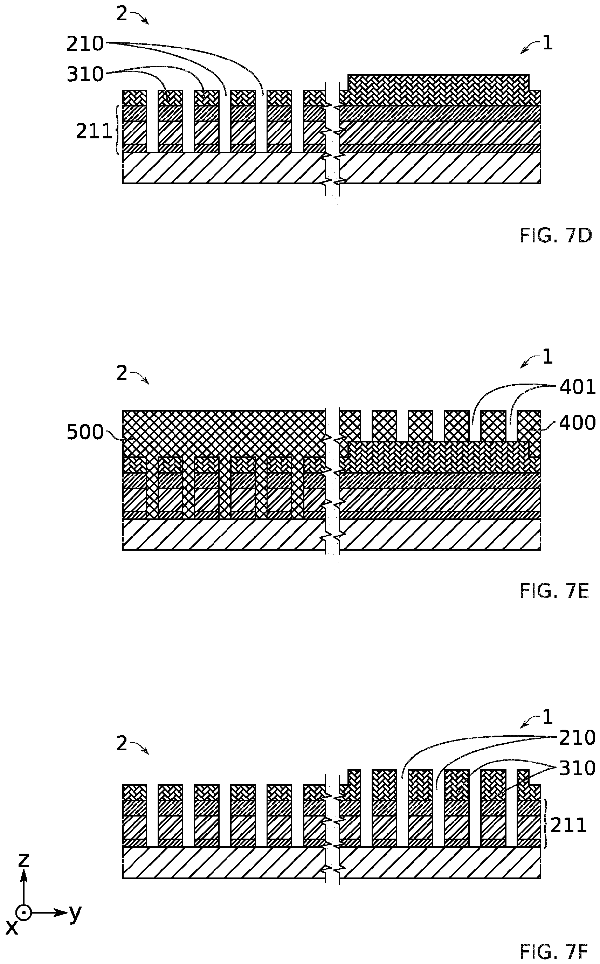

Des tranchées 210 sont ainsi réalisées dans l'empilement de la zone non PUF 2 (figure 7D). Les murs 211 surmontés des motifs de lignes 310 formés dans cette zone non PUF 2 ne présentent pas d'oscillations. Cela permet de former un niveau de pistes métalliques fonctionnelles. Le masque de protection 500 est ensuite retiré de la zone PUF 1, de façon à mettre en œuvre le procédé « damascene » modifié de lithographie/gravure décrit plus haut dans la zone PUF 1. Des tranchées 210 sont ainsi réalisées dans l'empilement de la zone PUF 1 tandis que la zone non PUF 2 est protégée par un masque de protection 500 (figure 7E). Après gravure des tranchées 210, les murs 211 surmontés des motifs de lignes 310 formés dans cette zone PUF 1 présentent des oscillations (figure 7F). Cela permet de former un niveau de pistes métalliques dysfonctionnelles, présentant des variations de largeur et/ou de position et/ou des ondulations.

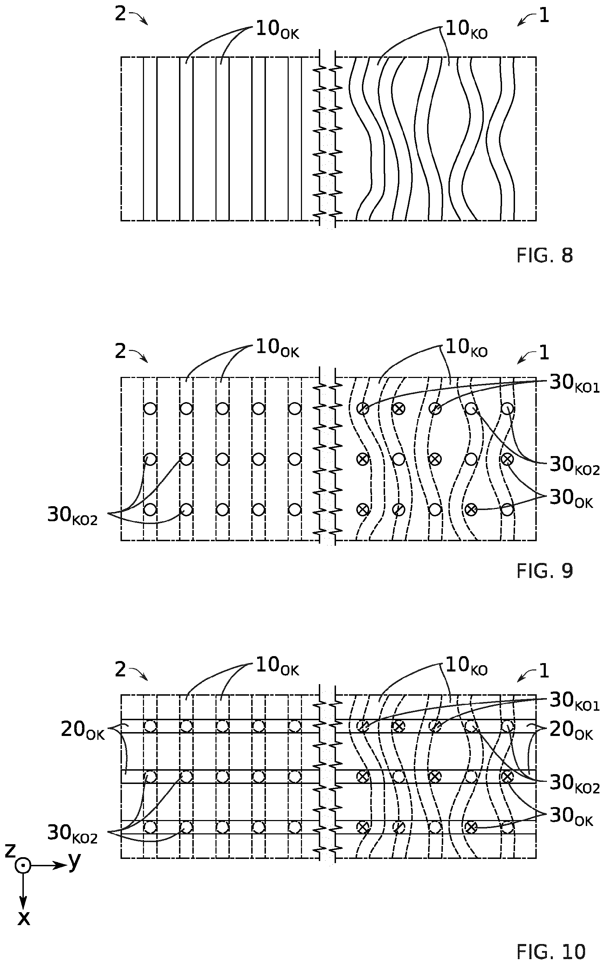

La figure 8 illustre schématiquement en vue de dessus les pistes électriques formées dans les zones PUF1 et non PUF 2 après remplissage des tranchées et planarisation. Les pistes électriques 10_{OK} du premier niveau de la zone non PUF 2 sont typiquement rectilignes, tandis que les pistes électriques 10_{KO} du premier niveau de la zone PUF 1 présentent des ondulations/variations de largeur aléatoires.

Ainsi, lorsque les vias sont formés selon le *layout* initial du circuit intégré, les vias de la zone non PUF 2 sont des vias fonctionnels 30_{OK}, et les vias de la zone PUF 1 comprennent des vias dysfonctionnels ou inactifs 30_{KO1}, 30_{KO2} (figure 9). Les vias sont typiquement formés simultanément dans les zones PUF 1 et non PUF 2.

La figure 10 illustre schématiquement en vue de dessus les pistes électriques 20_{OK} du deuxième niveau formées dans les zones PUF1 et non PUF 2. Les pistes électriques 20_{OK} du deuxième niveau sont typiquement formées simultanément dans les zones PUF 1 et non PUF 2, selon le *layout* initial du circuit intégré.

Au vu de la description qui précède, il apparaît clairement que le procédé proposé offre une solution particulièrement efficace pour réaliser une zone d'individualisation de type PUF.

L'invention n'est pas limitée aux modes de réalisations précédemment décrits et s'étend à tous les modes de réalisation couverts par les revendications.

Le mode de réalisation décrit ci-dessus s'intègre dans la fabrication de composés semi-conducteur au niveau du back end dit « cuivre ». L'invention s'étend néanmoins à des modes de réalisation utilisant un autre matériau conducteur que le cuivre. Pour cela, l'homme du métier saura sans difficulté effectuer les adaptations nécessaires en termes de choix de matériaux et d'étapes de procédé.

D'autres modes de réalisation du procédé sont évidemment possibles. Le procédé peut notamment être mis en œuvre pour générer des oscillations au niveau du premier niveau 10A de pistes électriques et/ou au niveau du deuxième niveau 20A de pistes électriques dans une zone d'individualisation. Cela augmente encore la probabilité que certains vias du niveau d'interconnexion d'une zone d'individualisation soient mal connectés avec les pistes électriques de l'un et/ou l'autre des premier et deuxième niveaux.

Par ailleurs, dans les modes de réalisation décrits en référence aux figures, le premier niveau, celui dont les pistes sont fonction des oscillations, est formé avant le deuxième niveau de pistes électriques. Néanmoins, l'invention s'étend aux cas dans lesquels, le premier niveau, celui dont les pistes sont fonction des oscillations, est formé après le deuxième niveau de pistes électriques.

En outre on peut prévoir que les motifs de ligne des premiers et deuxième niveaux ne soit pas rectilignes, comme illustré sur les figures 8 à 10, mais qu'ils soient curvilignes.

## Revendications

1. Procédé de réalisation d'une zone d'individualisation (2) d'une puce microélectronique, ladite puce comprenant au moins :
- un premier (10A) et un deuxième (20A) niveaux de pistes électriques (10, 20),
- un niveau (30A) d'interconnexions situées entre les premiers (10A) et deuxième (20A) niveaux de pistes électriques (10, 20) et comportant des vias (30) destinés à connecter électriquement des pistes électriques (10) du premier niveau (10A) avec des pistes électriques (20) du deuxième niveau (20A),
le procédé comprenant au moins les étapes suivantes effectuées au niveau de la zone d'individualisation (1) de la puce :
- fournir un empilement comprenant au moins une couche diélectrique (200, 201, 202) portée par un substrat (100) et surmontée d'une couche (300) de masque métallique, l'au moins une couche diélectrique (200, 201, 202) présentant une épaisseur h_{d}, et la couche (300) de masque métallique présentant une épaisseur hₘ et une contrainte résiduelle σᵣ,
- graver la couche (300) de masque métallique de sorte à former des motifs de lignes (310) de largeur I organisés selon un plan d'agencement prédéfini, lesdits motifs de lignes (310) étant destinés à être transférés dans l'au moins une couche diélectrique (200, 201, 202),
- graver l'au moins une couche diélectrique (200, 201, 202) entre les motifs de lignes (310), de façon à former des tranchées (210) séparées par des murs (211) à base de l'au moins une couche diélectrique,
- remplir les tranchées (210) avec un matériau électriquement conducteur de sorte à former les pistes électriques (10, 10_{KO}) du premier niveau (10A),
- former les vias (30, 30_{OK}, 30_{KO1}, 30_{KO2}) du niveau d'interconnexions (30A) en fonction du plan d'agencement prédéfini,
- former le deuxième niveau (20A) de pistes électriques (20, 20_{OK}),
le procédé étant **caractérisé en ce que** les épaisseurs h_{d} et hₘ, la contrainte résiduelle σᵣ, et la largeur I sont choisies de sorte à ce que les motifs de lignes (310) et les murs (211) sous-jacents présentent, après gravure de l'au moins une couche diélectrique (200, 201, 202), des oscillations aléatoires, le remplissage des tranchées (210) étant effectué de sorte que les pistes électriques (10, 10_{KO}) du premier niveau (10A) soient fonction de ces oscillations aléatoires, les oscillations aléatoires étant telles que certains au moins des vias (30_{KO1}, 30_{KO2}) ne soient pas connectés aux pistes électriques (10_{KO}) du premier niveau (10A).

2. Procédé selon la revendication précédente dans lequel l'épaisseur hₘ de la couche (300) de masque métallique est supérieure à 15 nm.

3. Procédé selon l'une quelconque des revendications précédentes dans lequel l'épaisseur h_{d} de l'au moins une couche diélectrique (200, 201, 202) est supérieure à 100 nm.

4. Procédé selon l'une quelconque des revendications précédentes dans lequel la couche (300) de masque métallique est faite ou est à base de l'un parmi : le Ti, le TiN ou le TaN.

5. Procédé selon l'une quelconque des revendications précédentes dans lequel l'au moins une couche diélectrique (200, 201, 202) comprend une couche à base de SiOCH dense ou poreux (p-SiOCH), ou à base de SiO₂.

6. Procédé selon l'une quelconque des revendications précédentes dans lequel la formation du deuxième niveau (20A) de pistes électriques (20) est effectuée de sorte à ce que les pistes électriques (20) du deuxième niveau (20A) présentent des oscillations aléatoires.

7. Procédé selon l'une quelconque des revendications précédentes dans lequel la puce présente au moins une autre zone, distincte de la zone d'individualisation (1), destinée à former une zone fonctionnelle (2) de la puce, le procédé comprenant en outre les étapes suivantes :
- former dans la zone d'individualisation (1) un masque de protection (500) sur la couche (300) de masque métallique préalablement à ladite formation des motifs de ligne (310),
- graver la couche (300) de masque métallique dans la zone fonctionnelle (2), en dehors de la zone d'individualisation (1), de sorte que la couche (300) de masque métallique dans la zone fonctionnelle (2) présente une épaisseur h_{f} < hₘ,
- retirer le masque de protection (500) avant ladite formation des motifs de lignes (310) dans la zone d'individualisation (1).

8. Procédé selon la revendication précédente dans lequel les motifs de lignes (310) sont formés successivement dans la zone fonctionnelle (2) et dans la zone d'individualisation (1).

9. Procédé de réalisation d'un dispositif microélectronique comportant au moins un circuit intégré, le circuit intégré comportant au moins:
- un premier (10A) et un deuxième (20A) niveaux de pistes électriques (10, 20),
- un niveau (30A) d'interconnexions situé entre les premiers (10A) et deuxième (20A) niveaux de pistes électriques et comportant des vias (30) destinés à connecter électriquement des pistes (10) du premier niveau (10A) avec des pistes (20) du deuxième niveau (20A),
- une zone d'individualisation (1) réalisée en mettant en œuvre le procédé selon l'une quelconque des revendications précédentes sur une partie seulement du circuit intégré.

10. Dispositif microélectronique comportant au moins un circuit intégré, le circuit intégré comportant au moins une zone d'individualisation (1) et une zone fonctionnelle (2), la zone d'individualisation (1) et la zone fonctionnelle (2) comprenant
- un premier (10A) et un deuxième (20A) niveaux des pistes électriques (10, 20),
- un niveau (30A) d'interconnexions situé entre les premiers (10A) et deuxième (20A) niveaux des pistes électriques et comportant des vias (30) destinés à connecter électriquement des pistes (10) du premier niveau (10A) avec des pistes (20) du deuxième niveau (20A),
**caractérisé en ce que** les pistes électriques (10, 10_{KO}) du premier niveau (10A) de la zone d'individualisation (1) sont séparées par des murs (211) à base d'au moins une couche diélectrique, les murs (211) présentant des oscillations aléatoires telles que certains au moins des vias (30_{KO1}, 30_{KO2}) ne soient pas connectés aux pistes électriques (10_{KO}) du premier niveau (10A), lesdits murs traversant la zone d'individualisation (1) de part en part.
